(19)

Europäisches
Patentamt
European
Patent Office
Office européen
des brevets

(11)　**EP 2 833 574 A1**

(12)　**EUROPEAN PATENT APPLICATION**
published in accordance with Art. 153(4) EPC

(43) Date of publication:
　　04.02.2015　Bulletin 2015/06

(21) Application number: **12876428.9**

(22) Date of filing: **25.10.2012**

(51) Int Cl.:
　　*H04L 12/26* (2006.01)

(86) International application number:
　　**PCT/CN2012/083466**

(87) International publication number:
　　**WO 2013/166811 (14.11.2013 Gazette 2013/46)**

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**

(30) Priority:　**09.05.2012　CN 201210141998**

(71) Applicant: **Huawei Technologies Co., Ltd.
　　Shenzhen, Guangdong 518129 (CN)**

(72) Inventors:
　　• **BAO, Pengcheng
　　　Shenzhen
　　　Guangdong 518129 (CN)**

　　• **PENG, Donghong
　　　Shenzhen
　　　Guangdong 518129 (CN)**
　　• **LIU, Hongming
　　　Shenzhen
　　　Guangdong 518129 (CN)**

(74) Representative: **Isarpatent
　　Patent- und Rechtsanwälte
　　Friedrichstrasse 31
　　80801 München (DE)**

(54)　**METHOD AND APPARATUS FOR ETHERNET PERFORMANCE MEASUREMENT**

(57)　　A method and device for measuring Ethernet performance, in which, a first OAM protocol frame transmitted by a local end network device to a peer end network device carries a measurement object indicator, so that the peer end network device can obtain peer end measurement statistical information corresponding to the measurement object indicator according to a corresponding relationship between the measurement object indicator and the peer end measurement statistical information. Since different measurement object indicators may correspond to different peer end measurement statistical information, the flow-based measurement can be achieved and, thus, the problem that measurements in the P2MP topology network cannot be implemented in the prior art is solved, thereby improving the capability of measuring network performance.

A local end network device obtains a measurement object indicator according to a target flow to be measured, where the measurement object indicator is corresponding to the target flow —101

The local end network device transmits a first OAM protocol frame to a peer end network device, where the first OAM protocol frame contains the measurement object indicator, so that the peer end network device obtains a peer end measurement statistical information corresponding to the measurement object indicator, according to a corresponding relationship between the measurement object indicator and the peer end measurement statistical information —102

The local end network device receives a second OAM protocol frame transmitted by the peer end network device, where the second OAM protocol frame contains the measurement object indicator and the peer end measurement statistical information —103

The local end network device measures Ethernet performance of the target flow, according to the measurement object indicator and the peer end measurement statistical information —104

FIG. 1

EP 2 833 574 A1

**Description**

This application claims priority to Chinese patent application No. 201210141998.8, filed on May 9, 2012, entitled "METHOD AND DEVICE FOR MEASURING ETHERNET PERFORMANCE", which is hereby incorporated by reference in its entirety.

**TECHNICAL FIELD**

The present invention relates to measurement technologies and, in particular, to a method and a device for measuring Ethernet performance.

**BACKGROUND**

An operation administration and maintenance (Operation Administration and Maintenance, OAM) model defined in an Ethernet includes maintenance entity group (Maintenance Entity Group, MEG) end point (MEG End Point, MEP). MEP is the end point of MEG and is able to initiate and terminate an OAM protocol frame which is used for measuring Ethernet performance. The network performance measurement may include the measurement of network performance such as the frame loss rate, frame delay, frame jitter and throughput. Take a single-ended measurement of frame loss rate as an example, a local end network device transmits a loss measurement message (Loss Measurement Message, LMM) frame to a peer end network device, where the LMM frame contains a transmitted service packet statistic value of the local end network device at the time when the local end network device transmits this LMM frame, and the peer end network device returns a loss measurement reply (Loss Measurement Reply, LMR) frame, where the LMR frame contains a received service message statistic value of the peer end network device at the time when the peer end network device receives this LMM frame. Then, the local end network device may measure the frame loss rate according to the statistic value of service messages contained in the received LMR frame.
However, in a point to multi-point (Point to Multi-Point, P2MP) topology network, in other words, there is P2MP network connection between the local end network device and the peer end network device, the above measurement method is not available.

**SUMMARY**

Embodiments of the present invention provide a method and a device for measuring Ethernet performance, so as to solve the problem of measuring P2MP topology network performance, thereby improving the capability of measuring network performance.
One aspect, a method for measuring Ethernet performance, includes:

obtaining, by a local end network device, a measurement object indicator according to a target flow to be measured, wherein the measurement object indicator is corresponding to the target flow;
transmitting, by the local end network device, a first OAM protocol frame, to a peer end network device, where the first OAM protocol frame contains the measurement object indicator, so that the peer end network device obtains peer end measurement statistical information corresponding to the measurement object indicator, according to a corresponding relationship between the measurement object indicator and the peer end measurement statistical information;
receiving, by the local end network device, a second OAM protocol frame, transmitted by the peer end network device, where the second OAM protocol frame contains the measurement object indicator and the peer end measurement statistical information; and
measuring, by the local end network device, Ethernet performance of the target flow, according to the measurement object indicator and the peer end measurement statistical information.

Another aspect, a method for measuring Ethernet performance, includes:

receiving, by a peer end network device, a first OAM protocol frame transmitted by a local end network device, where the first OAM protocol frame contains a measurement object indicator, and the measurement object indicator is obtained by the local end network device according to a target flow to be measured;
obtaining, by the peer end network device, peer end measurement statistical information corresponding to the measurement object indicator, according to a corresponding relationship between the measurement object indicator and the peer end measurement statistical information; and
transmitting, by the peer end network device, a second OAM protocol frame, to the local end network device, where the second OAM protocol frame contains the measurement object indicator and the peer end measurement statistical information, so that the local end network device measures Ethernet performance of the target flow according to the measurement object indicator and the peer end measurement statistical information.

Another aspect, an device for measuring Ethernet performance, includes:

an obtaining unit, configured to obtain a measurement object indicator according to a target flow to be measured, where the measurement object indicator is corresponding to the target flow;
a transmitter, configured to transmit a first OAM protocol frame to a peer end network device, where the first OAM protocol frame contains the measurement object indicator, so that the peer end network device obtains peer end measurement statistical information corresponding to the measurement object indicator, according to a corresponding relationship between the measurement object indicator and the peer end measurement statistical information;
a receiver, configured to receive a second OAM protocol frame transmitted by the peer end network device, where the second OAM protocol frame contains the measurement object indicator and the peer end measurement statistical information; and
a detector, configured to measure Ethernet performance of the target flow, according to the measurement object indicator and the peer end measurement statistical information.

Another aspect, an device for measuring Ethernet performance, includes:

a receiver, configured to receive a first OAM protocol frame transmitted by a local end network device, where the first OAM protocol frame contains a measurement object indicator, and the measurement object indicator is obtained by the local end network device according to a target flow to be measured;
an obtaining unit, configured to obtain peer end measurement statistical information corresponding to the measurement object indicator, according to a corresponding relationship between the measurement object indicator and the peer end measurement statistical information; and
a transmitter, configured to transmit a second OAM protocol frame to the local end network device, where the second OAM protocol frame contains the measurement object indicator and the peer end measurement statistical information, so that the local end network device measures Ethernet performance of the target flow according to the measurement object indicator and the peer end measurement statistical information.

In the methods and devices, a first OAM protocol frame transmitted by a local end network device to a peer end network device carries a measurement object indicator, so that the peer end network device can obtain peer end measurement statistical information corresponding to the measurement object indicator according to a corresponding relationship between the measurement object indicator and the peer end measurement statistical information. Since different measurement object indicators may correspond to different peer end measurement statistical information, the flow-based measurement can be achieved and, thus, the problem that measurements in the P2MP topology network cannot be implemented in the prior art is solved, thereby improving the capability of measuring network performance.

**BRIEF DESCRIPTION OF DRAWINGS**

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art can derive other drawings from these accompanying drawings without creative effort.

FIG. 1 is a schematic flowchart of a method for measuring Ethernet performance according to an embodiment of the present invention;
FIG. 2 is a schematic diagram of an LMM frame in the embodiment corresponding to FIG.1;
FIG. 3 is a schematic diagram of an LMR frame in the embodiment corresponding to FIG.1;
FIG. 4 is a schematic diagram of an LMM frame in the embodiment corresponding to FIG.1;
FIG. 5 is a schematic flowchart of a method for measuring Ethernet performance according to another embodiment of the present invention;
FIG. 6 is a schematic diagram of a device for measuring Ethernet performance according to another embodiment of the present invention; and
FIG. 7 is a schematic diagram of a device for measuring Ethernet performance according to another embodiment of the present invention.

**DESCRIPTION OF EMBODIMENTS**

To make the objectives, technical solutions, and advantages of embodiments of the present invention more clearly, the following describes the technical solutions in embodiments of the present invention with reference to the accompanying drawings in embodiments of the present invention. Apparently, the described embodiments are merely a part rather than all embodiments of the present invention. All other embodiments obtained by persons of ordinary skill in the art based on embodiments of the present invention without creative effort shall fall within the protection scope of the present invention.

The technical solutions of the present invention may be applied in any measurement of Ethernet performance, for example: the measurement of frame loss rate, frame delay, frame jitter or throughput and the like.

The local end network device or the peer end network device described in the present invention may be an optical network terminal (Optical Network Terminal, ONT), a customer premises equipment (Customer Premises Equipment, CPE), a digital subscriber line access multiplexer (Digital Subscriber Line Access Multiplexer, DSLAM), a router or a switch. The local end network device or the peer end network device described in the present invention may also be other network devices.

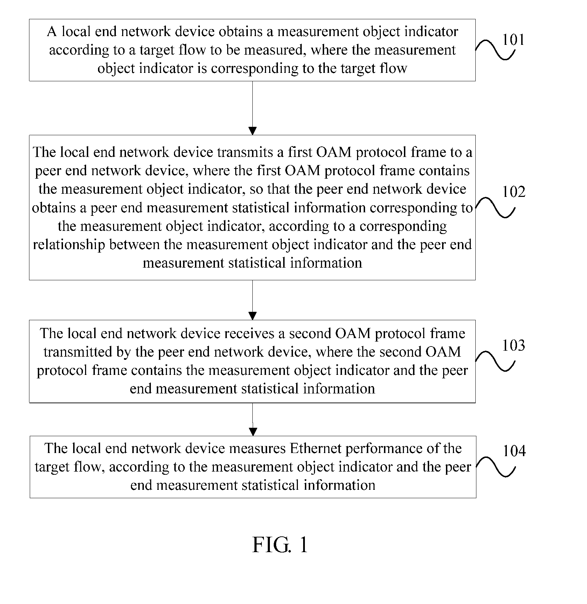

FIG. 1 is a schematic flowchart of a method for measuring Ethernet performance according to an embodiment of the present invention. As shown in FIG. 1, the method includes:

101: A local end network device obtains a measurement object indicator according to a target flow to be measured, where the measurement object indicator is corresponding to the target flow.

Optionally, in an optional implementation of the embodiment, the target flow may be defined by using a four-tuple composed of fields in Ethernet service packet header, where the four-tuple is <destination address (Destination Address, DA), source address (Source Address, SA), service priority and virtual local area network (Virtual Local Area Network, VLAN) identifier>; or, the target flow to be measured may be defined by using a subset of the above four-tuple, which will not be limited in this embodiment. For example, if multiple services of a certain user use different VLANs, then a target flow of a certain service of the user may be defined by selecting a two-tuple which is <SA, VLAN ID>, where the VLAN ID refers to the VLAN identifier.

It could be understood that, before performing the measurement, the local end network device may recognize the target flow to be measured according to an access control list (Access Control List, ACL) determined by a selected tuple. The ACL is an instruction list of interfaces of a router or a switch, and is used for controlling data packets which flow in or out of the interfaces. In general, the ACL includes a control list and a specified action. The ACL compares the rules in the control list with the data packets, and performs certain actions for a data packet which is in conformity with the control list, for example, the actions are allowing to pass, forbidding to pass, packet mirroring, traffic statistic and the like.

Optionally, in an optional implementation of the embodiment, in 101, the local end network device may specifically obtain the measurement object indicator corresponding to the target flow according to feature information of the target flow to be measured. The feature information may include one or multiple of a DA, an SA, a service priority or a VLAN ID.

102: The local end network device transmits a first OAM protocol frame to a peer end network device, where the first OAM protocol frame contains the measurement object indicator, so that the peer end network device obtains a peer end measurement statistical information corresponding to the measurement object indicator, according to a corresponding relationship between the measurement object indicator and the peer end measurement statistical information.

103: The local end network device receives a second OAM protocol frame transmitted by the peer end network device, where the second OAM protocol frame contains the measurement object indicator and the peer end measurement statistical information.

104: The local end network device measures Ethernet performance of the target flow, according to the measurement object indicator and the peer end measurement statistical information.

Optionally, in an optional implementation of the embodiment, after 101, the local end network device may also obtain local end measurement statistical information of the target flow; correspondingly, in 102, the first OAM protocol frame, transmitted from the local end network device to the peer end network device, may further contain the local end measurement statistical information. Then, in 103, the second OAM protocol frame received by the local end network device may further contain the local end measurement statistical information. In this case, in 104, the local end network device may specifically measure the Ethernet performance of the target flow according to the measurement object indicator, the local end measurement statistical information and the peer end measurement statistical information.

It should be understood that: the first OAM protocol frame, transmitted from the local end network device to the peer end network device, may further contain other fields in the prior art, which will not be repeated herein.

Optionally, in an optional implementation of the embodiment, in 101, the measurement object indicator obtained by the local end network device may include but not limit to the fields in the frame header of the first OAM protocol frame or the fields in the frame payload of the first OAM protocol frame.

Specifically, the MEP configuration in the prior art may be adopted, namely, the peer end network device contains an MEP, where the MEP may be an extension of the MEP in the prior art, and the number of the object (i.e., the target flow) that each MEP can monitor is extended from one to multiple. Each target flow is configured with a group of measurement resource (which may include but not limit to a flow ID (flow ID), a counter and a state machine). The MEP monitors each target flow, that is, the MEP matches the service packet through recognizing an ACL of the target flow, makes statistics of the matched service packets by utilizing the configured measurement resource, and generates the peer end measurement statistical information, therefore, the MEP realizes the flow-based monitoring.

Then, optionally, the first OAM protocol frame may use a field contained in the frame payload (i.e., a new field) as the measurement object indicator for indicating the target flow. For example, the field contained in the frame payload of the first OAM protocol frame may be the flow ID corresponding to the target flow. Correspondingly, after 102, and after the peer end network device receives the first OAM protocol frame, the OAM control layer entity contained in the peer end network device transmits the first OAM protocol frame to an MEP contained in the peer end network device, and then the MEP contained in the peer end network device may obtain the peer end measurement statistical information corresponding to the flow ID, according to the corresponding relationship between the flow ID and the peer end measurement statistical information.

Further, the flow ID in the embodiment of the present invention, may be in the form of a type length value (Type Length Value, TLV), namely, the flow ID includes: the type of the flow ID, the length of the flow ID and the value of the flow ID.

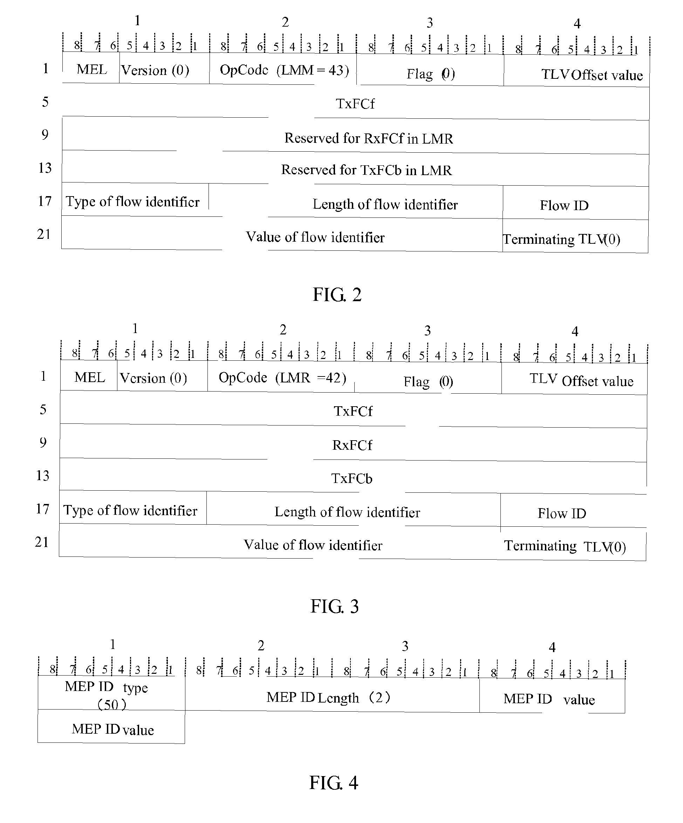

Take a single-ended measurement of frame loss rate as an example, the local end network device may transmit an LMM frame to the peer end network device, where the LMM frame carries flow ID. In this embodiment, the flow ID may specifically be represented in the form of TLV. Regarding the diagram of the LMM frame, please refer to FIG. 2. Each field in FIG. 2 has the following meaning:

MEL: this field refers to the MEG level, and is used for identifying the MEG level of the LMM frame. The value range is from 0 to 7.

Version: this field is used for identifying the version of the OAM protocol. In the prior art (for example, International Telecommunication Union (ITU)-Y.1731 protocol), the version is always 0.

Operation code (Operation Code, OpCode): this field is used for identifying the type of the LMM frame, and is used for recognizing the content of other parts of the LMM frame. Where, the OpCode of the LMM frame is 43, and the OpCode of the LMR frame is 42.

Tag: the utilization of each bit in this field depends on the type of the LMM frame.

TLV offset value: this field contains the offset quantity of the first TLV relative to the TLV offset value field. The value of this field is relative to the type of LMM frame. When the TLV offset value is 0, it points to the first byte after the TLV offset value field.

TxFcf: this field is used for recording a transmitted service packet statistic value at the time when the LMM frame is transmitted.

Reserved for RxFCf in LMR: this field is used for recording in the LMR frame, by the peer end network device, a received service message statistic value at the time when the LMM frame is received.

Reserved for TxFCb in LMR: this field is used for recording in the LMR frame, by the peer end network device, a transmitted service packet statistic value at the time when the LMR frame is transmitted.

Terminating TLV: this field is used for filling, and this field may be a value that all bytes are zero.

Different from the LMM frame in the prior art, the LMM frame in this embodiment further contains a flow identifier (Flow ID TLV) (namely, a flow ID in the form of TLV), and the Flow ID TLV includes: type of the flow identifier (Flow type), length of the flow identifier (Length) and value of the flow identifier (Flow ID).

Each field is illustrated as following:

Flow type: 1 byte, representing type of TLV value;
Length: 2 bytes, representing length of a Flow ID;
Flow ID: 4 bytes, the number of bytes occupied by this field is indicated by "Length", this field represents the flow ID which is allocated to MEP (specifically, a peer end network device) for making statistic.

Correspondingly, the peer end network device may transmit an LMR frame to the local end network device, where the LMR frame carries the flow ID. In this embodiment, the flow ID may specifically be represented in the form of TLV, please refer to FIG. 3 for the structure of the LMR frame. Specifically, the peer end network device copies the value of TxFCf in the LMM frame into the TxFCf field in the LMR frame, a transmitted statistic value in a peer end measurement statistical information corresponding to the flow identifier is carried in the TxFCb field, and a received statistic value in the peer end measurement statistical information corresponding to the flow identifier is carried in the RxFCf field, where the transmitted statistic value is obtained according to the corresponding relationship between the flow identifier and the peer end measurement statistical information, and the received statistic value is obtained according to the corresponding relationship between the flow identifier and the peer end measurement statistical information.

Then, optionally, the first OAM protocol frame may use a field (i.e., an existing field) contained in the frame header as the measurement object indicator for indicating a target flow. For example, the fields contained in the frame header of the first OAM protocol frame may be one or multiple of DA, SA, service priority and VLAN ID. Taking a two-tuple which is <SA, service priority> as an example, correspondingly, after 102, and after the peer end network device receives the first OAM protocol frame, the OAM control layer entity contained in the peer end network device transmits the first OAM protocol frame to an MEP contained in the peer end network device, then the MEP contained in the peer end network device may obtain the peer end measurement statistical information corresponding to the two-tuple which is <SA, service priority>, according to the correspondingly relationship between the two-tuple which is <SA, service priority> and the peer end measurement statistical information.

Specifically, the MEP configuration in the prior art may be extended, that is, the peer end network device may contain two or more MEPs, so that every MEP can still monitor one object (i.e., target flow) according to the solutions in the prior art. Where, each MEP is configured with a group of measurement resource (which may include but not limited to an MEP identifier (MEP ID), a counter and a state machine), respectively, and monitors each target flow, that is, the MEPs match the service packet through recognizing an ACL of the target flow, makes statistics of the matched service packets by utilizing the measurement resource respectively allocated for each MEP, and generates the peer end measurement statistical information, therefore, the MEPs realize the flow-based monitoring.

Then, optionally, the first OAM protocol frame may use a field contained in the frame header (i.e., a new field) as the measurement object indicator for indicating the target flow. For example, the field contained in the frame header of the first OAM protocol frame may be the MEP ID corresponding to the target flow. Correspondingly, after 102, and after the peer end network device receives the first OAM protocol frame, the OAM control layer entity contained in the peer end network device transmits the first OAM protocol frame to an MEP corresponding to the MEP ID according to the MEP ID, where the MEP is one of multiple MEPs contained in the peer end network device, and then the MEP may obtain the peer end measurement statistical information corresponding to the MEP.

Take a single-ended measurement of frame loss rate as an example, the local end network device may transmit an LMM frame to the peer end network device, where the LMM frame carries MEP ID. In this embodiment, the MEP ID may specifically be represented in the form of TLV. Regarding the structure of the MEP ID TLV (i.e., MEP ID in TLV format) in this embodiment, please refer to FIG. 4. The MEP ID TLV includes: type of the MEP (MEP type), length of the MEP ID (Length) and value of the MEP ID (MEP ID). Each field is illustrated as following:

MEP type: 1 byte, representing type of TLV value; here, a reserved TLV type value 50 may be used for representing MEP ID TLV;
Length: 2 bytes, representing length of Flow ID;
MEP ID: 2 bytes, the number of bytes occupied by this field is indicated by "Length" indicator, this field represents the ID of the target MEP, and a format required by International Telecommunication Union (ITU)-Y.1731 protocol standard may be used as the format of the MEP ID.

Optionally, in an optional implementation mode of the embodiment, take the single-ended measurement of frame loss rate as an example, the local end network device, according to the measurement object indicator, the local end measurement statistical information and the peer end measurement statistical information contained in the received LMR frame, may specifically obtain TxFCf field, RxFCf field and TxFCb field from the LMR frame, and temporarily save them together with the current statistic value RxFCl of the local received counter of the local end network device. The above testing process is performed once again by using the LMM frame. Through two times of LMM/LMR testing process, the frame loss may be calculated by using the formula as following:

$$FrameLossRate_{\text{remote-end}} = \left| TxFCf[t_c] - TxFCf[t_p] \right| - \left| RxFCf[t_c] - RxFCf[t_p] \right|$$

$$FrameLossRate_{near-end} = \left| TxFCb[t_c] - TxFCb[t_p] \right| - \left| RxFCl[t_c] - RxFCl[t_p] \right|$$

Where, the near-end measurement is to measure the packet loss value associated with packets transmitted by the peer end and received by the local end, i.e., the packet loss value associated with packets transmitted by the peer end network device and received by the local end network device. The peer end measurement is to measure the packet loss value associated with packets transmitted by the local end and received by the peer end, i.e., the packet loss value associated with packets transmitted by the local end network device and received by the peer end network device.

$TxFCf[t_c]$ is a transmitted service packet statistic value of the local end network at the time when the local end network transmits this LMM frame,

$RxFCf[t_c]$ is a received service packet statistic value of the peer end network at the time when the peer end network receives this LMM frame,

$TxFCf[t_p]$ is a transmitted service packet statistic value of the local end network at the time when the local end network transmits a previous LMM frame,

$RxFCf[t_p]$ is a received service packet statistic value of the peer end network at the time when the peer end network receives this LMM frame;

$TxFCb[t_c]$ is a transmitted service packet statistic value of the peer end network at the time when the peer end network transmits this LMM frame,

$RxFCl[t_c]$ is a received service packet statistic value of the local end network at the time when the local end network receives this LMM frame,

$TxFCb[t_p]$ is a transmitted service packet statistic value of the peer end network at the time when the peer end network transmits a previous LMM frame,

$RxFCl[t_p]$ is a received service packet statistic value of the local end network at the time when the local end network receives a previous LMM frame.

In this embodiment, a first OAM protocol frame transmitted by a local end network device to a peer end network device carries a measurement object indicator, so that the peer end network device can obtain peer end measurement statistical information corresponding to the measurement object indicator according to a corresponding relationship between the measurement object indicator and the peer end measurement statistical information. Since different measurement object indicators may correspond to different peer end measurement statistical information, the flow-based measurement can be achieved and, thus, the problem that measurements in the P2MP topology network cannot be implemented in the prior art is solved, thereby improving the capability of measuring network performance.

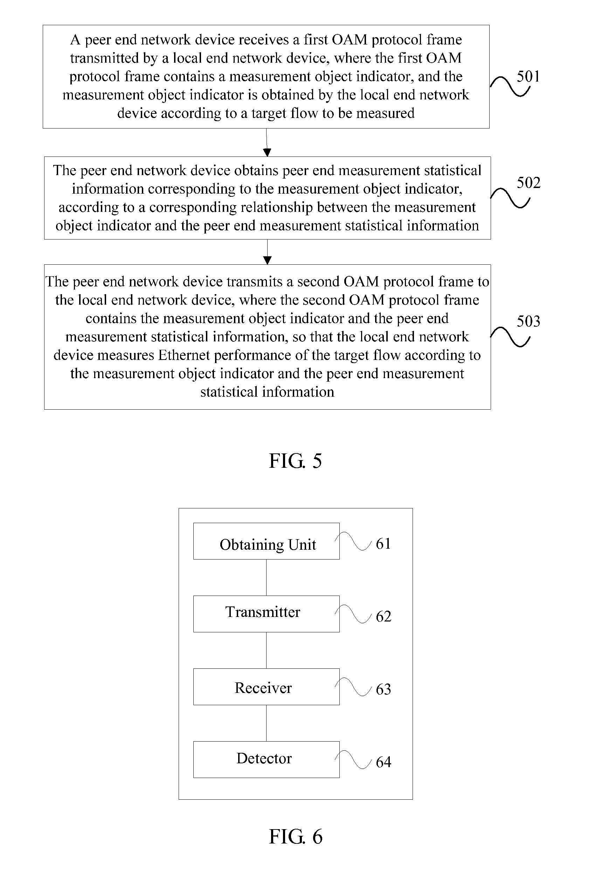

FIG.5 is a schematic flowchart of a method for measuring Ethernet performance according to another embodiment of the present invention, as shown in FIG. 5, the method includes:

501: A peer end network device receives a first OAM protocol frame transmitted by a local end network device, where the first OAM protocol frame contains a measurement object indicator, and the measurement object indicator is obtained by the local end network device according to a target flow to be measured.

Specifically, the target flow may be defined by using a four-tuple composed of fields in Ethernet service packet header, where the four-tuple is <destination address (Destination Address, DA), source address (Source Address, SA), service priority and virtual local area network (Virtual Local Area Network, VLAN) identifier>; or, the target flow to be measured may be defined by using a subset of the above four-tuple, which will not be limited in this embodiment. For example, if multiple services of a certain user use different VLANs, then a target flow of a certain service of the user may be defined by selecting a two-tuple which is <SA VLAN ID>.

Before performing the measurement, the local end network device may recognize the target flow to be measured according to an access control list (Access Control List, ACL) determined by a selected tuple. The ACL is an instruction list of interfaces of a router or a switch, and is used for controlling data packets which flow in or out of the interfaces. In general, the ACL includes a control list and specified actions. The ACL compares the rules in the control list with the data packets, and performs certain actions for a data packet which is in conformity with the control list, for example, the actions are allowing to pass, forbidding to pass, packet mirroring, traffic statistic and the like.

Optionally, in an optional implementation of the embodiment, the local end network device may specifically obtain the measurement object indicator corresponding to the target flow according to feature information of the target flow to be measured. The feature information may include one or multiple of a DA, an SA, a service priority or a VLAN ID.

502: The peer end network device obtains peer end measurement statistical information corresponding to the measurement object indicator, according to a corresponding relationship between the measurement object indicator and the peer end measurement statistical information.

503: The peer end network device transmits a second OAM protocol frame to the local end network device, where the second OAM protocol frame contains the measurement object indicator and the peer end measurement statistical information, so that the local end network device measures Ethernet performance of the target flow according to the measurement object indicator and the peer end measurement statistical information.

Optionally, in an optional implementation of the embodiment, before 501, the local end network device may also obtain local end measurement statistical information of the target flow; correspondingly, in 501, the first OAM protocol frame, received by the peer end network device, may further contain the local end measurement statistical information. Then, in 503, the second OAM protocol frame, transmitted from the peer end network device to the local end network device may further contain the local end measurement statistical information. In this case, the local end network device may specifically measure the Ethernet performance of the target flow according to the measurement object indicator, the local end measurement statistical information and the peer end measurement statistical information.

It could be understood that: the first OAM protocol frame received by the peer end network device may further contain other fields in prior art, which will be not repeated herein.

Optionally, in an optional implementation of the embodiment, the measurement object indicator, contained in the first OAM protocol frame, may include but not limit to the fields in the frame header of the first OAM protocol frame or the fields in the frame payload of the first OAM protocol frame.

Specifically, the MEP configuration in the prior art may be adopted, namely, the peer end network device contains an MEP, where the MEP may be an extension of the MEP in the prior art, and the number of the object (i.e., the target flow) that each MEP can monitor is extended from one to multiple. Each target flow is configured with a group of measurement resource (which may include but not limit to a flow ID (ID), a counter and a state machine). The MEP monitors each target flow, that is, the MEP matches the service packet through recognizing an ACL of the target flow, makes statistics of the matched service packets by utilizing the configured measurement resource, and generates the peer end measurement statistical information, therefore, the MEP realizes the flow-based monitoring.

Then, optionally, the first OAM protocol frame may use a field contained in the frame payload (i.e., a new field) as the measurement object indicator for indicating the target flow. For example, the field contained in the frame payload of the first OAM protocol frame may be the flow ID corresponding to the target flow. Correspondingly, in 502, after the peer end network device receives the first OAM protocol frame, the OAM control layer entity contained in the peer end network device transmits the first OAM protocol frame to an MEP contained in the peer end network device, and then the MEP contained in the peer end network device may obtain the peer end measurement statistical information corresponding to the flow ID, according to the corresponding relationship between the flow ID and the peer end measurement statistical information. For a detailed description, please refer to the relative content in the embodiment corresponding to FIG. 1, which will not be repeated herein.

Then, optionally, the first OAM protocol frame may use a field (i.e., an existing field) contained in the frame header as the measurement object indicator for indicating a target flow. For example, the fields contained in the frame header of the first OAM protocol frame may be one or multiple of DA, SA, service priority and VLAN ID. Taking a two-tuple which is <SA, service priority> as an example, correspondingly, in 502, and after the peer end network device receives the first OAM protocol frame, the OAM control layer entity contained in the peer end network device transmits the first OAM protocol frame to an MEP contained in the peer end network device, then the MEP contained in the peer end network device may obtain the peer end measurement statistical information corresponding to the two-tuple which is <SA, service priority>, according to the correspondingly relationship between the two-tuple which is <SA, service priority> and the peer end measurement statistical information.

Specifically, the MEP configuration in the prior art (i.e., the peer end network device contains one MEP) may be extended, that is, the peer end network device may contain two or more MEPs, so that every MEP can still monitor one object (i.e., target flow) according to the solutions in the prior art. Where, each MEP is configured with a group of measurement resource (which may include but not limited to an MEP identifier (MEP ID), a counter and a state machine) respectively, and monitors each target flow, that is, the MEPs match the service packet through recognizing an ACL of the target flow, makes statistics of the matched service packets by utilizing the measurement resource respectively allocated for each MEP, and generates the peer end measurement statistical information, therefore, the MEPs realize the flow-based monitoring.

Then, optionally, the first OAM protocol frame may use a field contained in the frame header (i.e., a new field) as the measurement object indicator for indicating the target flow. For example, the field contained in the frame header of the first OAM protocol frame may be the MEP ID corresponding to the target flow. Correspondingly, in 502, and after the peer end network device receives the first OAM protocol frame, the OAM control layer entity contained in the peer end network device transmits the first OAM protocol frame to an MEP corresponding to the MEP ID according to the MEP ID, where the MEP is one of multiple MEPs contained in the peer end network device, and then the MEP may obtain the peer end measurement statistical information corresponding to the MEP. For a detailed description, please refer to the relative content in the embodiment corresponding to FIG. 1, which will not be repeated herein.

In this embodiment, a first OAM protocol frame transmitted by a local end network device to a peer end network device carries a measurement object indicator, so that the peer end network device can obtain peer end measurement statistical information corresponding to the measurement object indicator according to a corresponding relationship between the measurement object indicator and the peer end measurement statistical information. Since different measurement object indicators may correspond to different peer end measurement statistical information, the flow-based measurement can be achieved and, thus, the problem that measurements in the P2MP topology network cannot be implemented in the prior art is solved, thereby improving the capability of measuring network performance.

It should be noted that the aforementioned method embodiments are described as a combination of a series of actions for simplicity. However, persons skilled in the art should know that the present invention is not limited by the described action sequence because some steps may be performed in any other sequence or performed simultaneously according to the present invention. Furthermore, persons skilled in the art should also know that the embodiments described in the specification are preferred embodiments, and the related actions and modules may not be necessary for the present invention.

In the above embodiments, each embodiment has its emphasis. For contents not described in detail in one embodiment, please refer to related contents described in other embodiments.

FIG.6 is a schematic diagram of a device for measuring Ethernet performance according to another embodiment of the present invention, as shown in FIG.6, the device for measuring Ethernet performance according to this embodiment may include an obtaining unit 61, a transmitter 62, a receiver 63 and a detector 64. Where, the obtaining unit 61 is configured to obtain a measurement object indicator according to a target flow to be measured, where the measurement object indicator is corresponding to the target flow; the transmitter 62 is configured to transmit a first OAM protocol frame to a peer end network device, where the first OAM protocol frame contains the measurement object indicator, so that the peer end network device obtains a peer end measurement statistical information corresponding to the measurement object indicator, according to a corresponding relationship between the measurement object indicator and the peer end measurement statistical information; the receiver 63 is configured to receive a second OAM protocol frame transmitted by the peer end network device, where the second OAM protocol frame contains the measurement object indicator and the peer end measurement statistical information; and the detector 64 is configured to measure Ethernet performance of the target flow, according to the measurement object indicator and the peer end measurement statistical information.

Optionally, in an optional implementation of the embodiment, the target flow may be defined by using a four-tuple composed of fields in Ethernet service packet header, where the four-tuple is <destination address (Destination Address, DA), source address (Source Address, SA), service priority and virtual local area network (Virtual Local Area Network, VLAN) identifier>; or, the target flow to be measured may be defined by using a subset of the above four-tuple, which will not be limited in this embodiment. For example, if multiple services of a certain user use different VLANs, then a target flow of a certain service of the user may be defined by selecting a two-tuple which is <SA, VLAN ID>.

Before performing the measurement, the device for measuring Ethernet performance may recognize the target flow to be measured according to an access control list (Access Control List, ACL) determined by a selected tuple. The ACL is an instruction list of interfaces of a router or a switch, and is used for controlling data packets which flow in or out of the interfaces. In general, the ACL includes a control list and specified actions. The ACL compares the rules in the control list with the data packets, and performs certain actions for a data packet which is in conformity with the control list, for example, the actions are allowing to pass, forbidding to pass, packet mirroring, traffic statistic and the like.

Optionally, in an optional implementation of the embodiment, the obtaining unit 61 may specifically obtain the measurement object indicator corresponding to the target flow according to feature information of the target flow to be measured. The feature information may include at least one of a DA, an SA, a service priority or a VLAN ID.

Optionally, in an optional implementation of the embodiment, the obtaining unit 61 may further obtain local end measurement statistical information of the target flow; correspondingly, the first OAM protocol frame, transmitted from the transmitter 62 to the peer end network device, may further contain the local end measurement statistical information. Then, the second OAM protocol frame received by the receiver 63 may further contain the local end measurement statistical information. In this case, the detector 64 may specifically measure the Ethernet performance of the target flow, according to the measurement object indicator, the local end measurement statistical information and the peer end measurement statistical information.

It could be understood that: the first OAM protocol frame, transmitted from the transmitter 62 to the peer end network device, may further include other fields in the prior art, which will not be repeated herein.

Optionally, in an optional implementation of the embodiment, the measurement object indicator obtained by the obtaining unit 61 may include but not limit to the fields in the frame header of the first OAM protocol frame or the fields in the frame payload of the first OAM protocol frame.

In this embodiment, a first OAM protocol frame transmitted by a transmitter to a peer end network device carries a measurement object indicator, so that the peer end network device can obtain peer end measurement statistical information corresponding to the measurement object indicator according to a corresponding relationship between the measurement object indicator and the peer end measurement statistical information. Since different measurement object indicators may correspond to different peer end measurement statistical information, the flow-based measurement can be achieved and, thus, the problem that measurements in the P2MP topology network cannot be implemented in the prior art is solved, thereby improving the capability of measuring network performance.

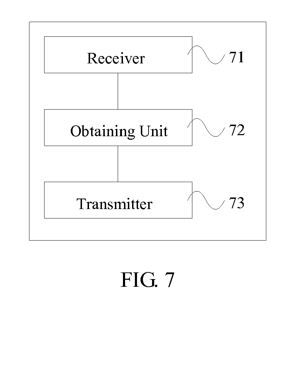

FIG. 7 is a schematic diagram of a device for measuring Ethernet performance according to another embodiment of the present invention, as shown in FIG.7, the device for measuring Ethernet performance of this embodiment may include a receiver 71, an obtaining unit 72 and a transmitter 73. Where, the receiver 71 is configured to receive a first OAM protocol frame transmitted by a local end network device, where the first OAM protocol frame contains a measurement object indicator, and the measurement object indicator is obtained by the local end network device according to a target flow to be measured; the obtaining unit 72 is configured to obtain peer end measurement statistical information corresponding to the measurement object indicator, according to a corresponding relationship between the measurement object indicator and the peer end measurement statistical information; and the transmitter 73 is configured to transmit a second OAM protocol frame to the local end network device, where the second OAM protocol frame contains the measurement object indicator and the peer end measurement statistical information, so that the local end network device measures Ethernet performance of the target flow according to the measurement object indicator and the peer end measurement statistical information.

Optionally, in an optional implementation of the embodiment, the target flow may be defined by using a four-tuple composed of fields in Ethernet service packet header, where the four-tuple is <destination address (Destination Address, DA), source address (Source Address, SA), service priority and virtual local area network (Virtual Local Area Network, VLAN) identifier>; or, the target flow to be measured may be defined by using a subset of the above four-tuple, which will not be limited in this embodiment. For example, if multiple services of a certain user use different VLANs, then a target flow of a certain service of the user may be defined by selecting a two-tuple which is <SA, VLAN ID>.

Before performing the measurement, the local end network device may recognize the target flow to be measured according to an access control list (Access Control List, ACL) determined by a selected tuple. The ACL is an instruction list of interfaces of a router or a switch, and is used for controlling data packets which flow in or out of the interfaces. In general, the ACL includes a control list and specified actions. The ACL compares the rules in the control list with the data packets, and performs certain actions for a data packet which is in conformity with the control list, for example, the actions are allowing to pass, forbidding to pass, packet mirroring, traffic statistic and the like.

Optionally, in an optional implementation of the embodiment, the local end network device may specifically obtain the measurement object indicator corresponding to the target flow according to feature information of the target flow to be measured. The feature information may include at least one of a DA, an SA, a service priority or a VLAN ID.

Optionally, in an optional implementation of the embodiment, the measurement object indicator, contained in the first OAM protocol frame received by the receiver 71, may include but not limit to the fields in the frame header of the first OAM protocol frame or the fields in the frame payload of the first OAM protocol frame.

Specifically, the MEP configuration in the prior art may be adopted, namely, the obtaining unit 72 contains an MEP, where the MEP may be an extension of the MEP in the prior art, and the number of the object (i.e., the target flow) that each MEP can monitor is extended from one to multiple. Each target flow is configured with a group of measurement resource (which may include but not limit to a flow ID (ID), a counter and a state machine). The obtaining unit 72 is also configured to monitor each target flow. That is, the MEP matches the service packet through recognizing an ACL of the target flow, makes statistics of the matched service packets by utilizing the configured measurement resource, and generates the peer end measurement statistical information, therefore, the MEP realizes the flow-based monitoring.

Then, optionally, the first OAM protocol frame may use a field contained in the frame payload (i.e., a new field) as the measurement object indicator for indicating the target flow. For example, the field contained in the frame payload of the first OAM protocol frame may be the flow identifier corresponding to the target flow; correspondingly, after the receiver 71 receives the first OAM protocol frame, the receiver transmits the first OAM protocol frame to the OAM control layer entity contained in the obtaining unit 72, and the OAM control layer entity contained in the obtaining unit 72 transmits the first OAM protocol frame to an MEP contained in the peer end network device, and then the MEP contained in the obtaining unit 72 may obtain the peer end measurement statistical information corresponding to the flow ID, according to the corresponding relationship between the flow identifier and the peer end measurement statistical information. For a detailed description, please refer to the relative content in the embodiment corresponding to FIG. 1, which will not be repeated herein.

Then, optionally, the first OAM protocol frame may use a field (i.e., an existing field) contained in the frame header as the measurement object indicator for indicating a target flow. For example, the fields contained in the frame header of the first OAM protocol frame may be one or multiple of DA, SA, service priority and VLAN ID. Taking a two-tuple which is <SA, service priority> as an example, correspondingly, after the receiver 71 receives the first OAM protocol frame, the receiver 71 transmits the first OAM protocol frame to the OAM control layer entity contained in the obtaining unit 72, and the OAM control layer entity contained in the obtaining unit 72 transmits the first OAM protocol frame to an MEP contained in the obtaining unit 72, then the MEP contained in the obtaining unit 72 may obtain the peer end measurement statistical information corresponding to the two-tuple which is <SA, service priority>, according to the correspondingly relationship between the two-tuple which is <SA, service priority> and the peer end measurement statistical information.

Specifically, the MEP configuration in the prior art may be extended, that is, the obtaining unit 72 may contain two or more MEPs, so that every MEP can still monitor one object (i.e., target flow) according to the solutions in the prior art. Where, each MEP is configured with a group of measurement resource (which may include but not limited to an MEP identifier (MEP ID), a counter and a state machine), respectively. The obtaining unit 72 is further configured to monitor each target flow, that is, the MEPs match the service packet through recognizing an ACL of the target flow, makes statistics of the matched service packets by utilizing the measurement resource respectively allocated for each MEP, and generates the peer end measurement statistical information, therefore, the MEPs realize the flow-based monitoring.

Then, optionally, the first OAM protocol frame may use a field contained in the frame header (i.e., a new field) as the measurement object indicator for indicating the target flow. For example, the field contained in the frame header of the first OAM protocol frame may be the MEP ID corresponding to the target flow. Correspondingly, after the receiver 71 receives the first OAM protocol frame, the receiver 71 transmits the first OAM protocol frame to the OAM control layer entity contained in the obtaining unit 72, and the OAM control layer entity contained in the obtaining unit 72 transmits the first OAM protocol frame to an MEP corresponding to the MEP ID according to the MEP ID, where the MEP is one of multiple MEPs contained in the obtaining unit 72, and then the MEP may obtain the peer end measurement statistical information corresponding to the MEP. For a detailed description, please refer to the relative content in the embodiment corresponding to FIG. 1, which will not be repeated herein.

In this embodiment, a first OAM protocol frame transmitted by a local end network device to a peer end network device carries a measurement object indicator, so that the obtaining unit can obtain peer end measurement statistical information corresponding to the measurement object indicator according to a corresponding relationship between the measurement object indicator and the peer end measurement statistical information. Since different measurement object indicators may correspond to different peer end measurement statistical information, the flow-based measurement can be achieved and, thus, the problem that measurements in the P2MP topology network cannot be implemented in the prior art is solved, thereby improving the capability of measuring network performance.

Persons of ordinary skill in the art could understand that, for the purpose of convenient and brief description, for a detailed working process of the system, device and unit described foregoing, reference may be made to corresponding process described in the above method embodiments, which will not be repeated herein.

In the embodiments provided in the present application, it should be understood that, the disclosed system, device and method may be implemented in other modes. For example, the described device embodiments are merely exemplary. For example, the unit division is merely logical function division and may be other divisions in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate part may or may not be separated physically, and parts displayed as units may or may not be physical units, may be located in one position, or may be distributed on multiple network units. A part or all of the units may be selected according to an actual need to achieve the objectives of the solutions of the embodiments.

In addition, functional units in embodiments of the present invention may be integrated into one processing unit, or each of the units may exist alone physically, or two or more units are integrated into one unit. The integrated unit may be implemented through hardware, or may also be implemented in a form of hardware plus a software functional module. For example, the detector, the transmitter, the receiver and the obtaining unit may be implemented via a general central processing unit (CPU), an application specific integrated circuit (Application Specific Integrated Circuit, ASIC), or a field programmable gate array (Field Programmable Gate Array, FPGA).

The integrated unit implemented in the form of software functional unit may be stored in a computer readable storage medium. The software functional unit is stored in a storage medium, and contains several instructions used to instruct computer equipment (for example, a personal computer, a server, or network equipment) to perform the steps of the methods according to the embodiments of the present invention. The storage medium may be any medium that can store program codes, such as a U disk, a removable hard disk, a read-only memory (ROM, Read-Only memory), a random access memory (RAM, Random Access Memory), a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some technical features thereof, without departing from the spirit and scope of the technical solutions of embodiments of the present invention.

**Claims**

1.    A method for measuring Ethernet performance, comprising:

   obtaining, by a local end network device, a measurement object indicator according to a target flow to be measured, wherein the measurement object indicator is corresponding to the target flow;
   transmitting, by the local end network device, a first operation administration and maintenance protocol frame, to a peer end network device, wherein the first operation administration and maintenance protocol frame contains the measurement object indicator, so that the peer end network device obtains peer end measurement statistical information corresponding to the measurement object indicator, according to a corresponding relationship between the measurement object indicator and the peer end measurement statistical information;
   receiving, by the local end network device, a second operation administration and maintenance protocol frame transmitted by the peer end network device, wherein the second operation administration and maintenance protocol frame contains the measurement object indicator and the peer end measurement statistical information; and

measuring, by the local end network device, Ethernet performance of the target flow according to the measurement object indicator and the peer end measurement statistical information.

2. The method according to claim 1, wherein after the obtaining, by the local end network device, the measurement object indicator according to the target flow to be measured, wherein the measurement object indicator is corresponding to the target flow, further comprising:

obtaining, by the local end network device, local end measurement statistical information of the target flow;
the first operation administration and maintenance protocol frame further contains the local end measurement statistical information;
the second operation administration and maintenance protocol frame further contains the local end measurement statistical information;
the measuring, by the local end network device, the Ethernet performance according to the measurement object indicator and the peer end measurement statistical information, comprises:

measuring, by the local end network device, the Ethernet performance of the target flow, according to the measurement object indicator, the local end measurement statistical information and the peer end measurement statistical information.

3. The method according to claim 1 or 2, wherein the peer end network device contains a maintenance entity group end point; the measurement object indicator is one or multiple of a target address, a source address, a service priority or a virtual local area network identifier corresponding to the target flow; and
the obtaining, by the peer end network device, the peer end measurement statistical information corresponding to the measurement object indicator according to the corresponding relationship between the measurement object indicator and the peer end measurement statistical information, comprises:

the maintenance entity group end point contained in the peer end network device obtains the peer end measurement statistical information corresponding to one or multiple of the target address, the source address, the service priority or the virtual local area network identifier, according to a corresponding relationship between one or multiple of the target address, the source address, the service priority or the virtual local area network identifier and the peer end measurement statistical information.

4. The method according to claim 1 or 2, wherein the peer end network device contains a maintenance entity group end point, the measurement object indicator is a flow identifier corresponding to the target flow; and
the obtaining, by the peer end network device, the peer end measurement statistical information corresponding to the measurement object indicator according to the corresponding relationship between the measurement object indicator and the peer end measurement statistical information, comprises:

obtaining, by the maintenance entity group end point contained in the peer end network device, the peer end measurement statistical information corresponding to the flow identifier according to the corresponding relationship between the flow identifier and the peer end measurement statistical information.

5. The method according to claim 1 or 2, wherein the peer end network device contains at least two maintenance entity group end points, the measurement object indicator is a maintenance entity group end point identifier corresponding to the target flow; and
the obtaining, by the peer end network device, the peer end measurement statistical information corresponding to the measurement object indicator according to the corresponding relationship between the measurement object indicator and the peer end measurement statistical information, comprises:

transmitting, by an operation administration and maintenance control entity contained in the peer end network device, the first operation administration and maintenance protocol frame to a maintenance entity group end point corresponding to the maintenance entity group end point identifier of the at least two maintenance entity group end points, and the maintenance entity group end point corresponding to the maintenance entity group end point identifier obtains the peer end measurement statistical information corresponding to the maintenance entity group end point.

**6.** The method according to any one of claims 1 to 5, wherein the obtaining, by the local end network device, the measurement object indicator according to the target flow to be measured, wherein the measurement object indicator is corresponding to the target flow, comprises:

obtaining, by the local end network device, the measurement object indicator corresponding to the target flow according to feature information of the target flow to be measured, wherein the feature information comprises one or multiple of a target address, a source address, a service priority or a virtual local area network identifier.

**7.** A method for measuring Ethernet performance, comprising:

receiving, by a peer end network device, a first operation administration and maintenance protocol frame transmitted by a local end network device, wherein the first operation administration and maintenance protocol frame contains a measurement object indicator, and the measurement object indicator is obtained by the local end network device according to a target flow to be measured;

obtaining, by the peer end network device, peer end measurement statistical information corresponding to the measurement object indicator, according to a corresponding relationship between the measurement object indicator and the peer end measurement statistical information; and

transmitting, by the peer end network device, a second operation administration and maintenance protocol frame to the local end network device, wherein the second operation administration and maintenance protocol frame contains the measurement object indicator and the peer end measurement statistical information, so that the local end network device measures Ethernet performance of the target flow according to the measurement object indicator and the peer end measurement statistical information.

**8.** The method according to claim 7, wherein before the receiving, by the peer end network device, the first operation administration and maintenance protocol frame transmitted by the local end network device, further comprising:

obtaining, by the local end network device, local end measurement statistical information of the target flow; wherein

the first operation administration and maintenance protocol frame further contains the local end measurement statistical information;

the second operation administration and maintenance protocol frame further contains the local end measurement statistical information;

the measuring, by the local end network device, the Ethernet performance of the target flow according to the measurement object indicator and the peer end measurement statistical information, comprises:

measuring, by the local end network device, the Ethernet performance of the target flow, according to the measurement object indicator, the local end measurement statistical information and the peer end measurement statistical information.

**9.** The method according to claim 7 or 8, wherein the peer end network device contains a maintenance entity group end point; the measurement object indicator is one or multiple of a target address, a source address, a service priority or a virtual local area network identifier corresponding to the target flow; and

the obtaining, by the peer end network device, the peer end measurement statistical information corresponding to the measurement object indicator, according to the corresponding relationship between the measurement object indicator and the peer end measurement statistical information, comprises:

obtaining, by the maintenance entity group end point contained in the peer end network device, the peer end measurement statistical information corresponding to one or multiple of the target address, the source address, the service priority or the virtual local area network identifier, according to a corresponding relationship between one or multiple of the target address, the source address, the service priority or the virtual local area network identifier and the peer end measurement statistical information.

**10.** The method according to claim 7 or 8, wherein the peer end network device contains a maintenance entity group end point, the measurement object indicator is a flow identifier corresponding to the target flow; and

the obtaining, by the peer end network device, the peer end measurement statistical information corresponding to the measurement object indicator, according to the corresponding relationship between the measurement object indicator and the peer end measurement statistical information, comprises:

obtaining, by the maintenance entity group end point contained in the peer end network device, the peer end measurement statistical information corresponding to the flow identifier, according to a corresponding relationship between the flow identifier and the peer end measurement statistical information.

11. The method according to claim 9 or 10, further comprising:

monitoring, by the peer end network device, the target flow, matching a service packet through recognizing an access control list of the target flow, making statistics of the matched service packets by utilizing a configured measurement resource, and generating the peer end measurement statistical information.

12. The method according to claim 7 or 8, wherein the peer end network device contains at least two maintenance entity group end points; the measurement object indicator is a maintenance entity group end point identifier corresponding to the target flow; and
the obtaining, by the peer end network device, the peer end measurement statistical information corresponding to the measurement object indicator, according to the corresponding relationship between the measurement object indicator and the peer end measurement statistical information, comprises:

transmitting, by an operation administration and maintenance control entity contained in the peer end network device, the first operation administration and maintenance protocol frame to a maintenance entity group end point corresponding to the maintenance entity group end point identifier of the at least two maintenance entity group end points, and
obtaining, by the maintenance entity group end point corresponding to the maintenance entity group end point identifier, the peer end measurement statistical information corresponding to the maintenance entity group end point.

13. The method according to claim 12, further comprising:

monitoring, by the peer end network device, the target flow, matching a service packet through recognizing an access control list of the target flow, making statistics of the matched service packet by utilizing measurement resources configured for the at least two maintenance entity group end points, and generating the peer end measurement statistical information.

14. The method according to any one of claims 7 to 13, wherein the obtaining, by the local end network device, the measurement object indicator corresponding to the target flow according to the target flow to be measured, comprises:

obtaining, by the local end network device, the measurement object indicator according to feature information of the target flow to be measured, wherein the feature information comprises one or multiple of a target address, a source address, a service priority or a virtual local area network identifier.

15. A device for measuring Ethernet performance, comprising:

an obtaining unit, configured to obtain a measurement object indicator according to a target flow to be measured, wherein the measurement object indicator is corresponding to the target flow;
a transmitter, configured to transmit a first operation administration and maintenance protocol frame, to a peer end network device, wherein the first operation administration and maintenance protocol frame contains the measurement object indicator, so that the peer end network device obtains peer end measurement statistical information corresponding to the measurement object indicator, according to a corresponding relationship between the measurement object indicator and the peer end measurement statistical information;
a receiver, configured to receive a second operation administration and maintenance protocol frame transmitted by the peer end network device, wherein the second operation administration and maintenance protocol frame contains the measurement object indicator and the peer end measurement statistical information; and
a detector, configured to measure Ethernet performance of the target flow, according to the measurement object indicator and the peer end measurement statistical information.

16. The device according to claim 15, wherein the obtaining unit is further configured to obtain local end measurement statistical information of the target flow;
the first operation administration and maintenance protocol frame further contains the local end measurement statistical information;

the second operation administration and maintenance protocol frame further contains the local end measurement statistical information;
the detector is specifically configured to:

measure the Ethernet performance of the target flow, according to the measurement object indicator, the local end measurement statistical information and the peer end measurement statistical information.

17. The device according to any one of claim 15 or 16, wherein the obtaining unit is specifically configured to:

obtain the measurement object indicator corresponding to the target flow according to feature information of the target flow to be measured, wherein the feature information comprises one or multiple of a target address, a source address, a service priority or a virtual local area network identifier.

18. A device for measuring Ethernet performance, comprising:

a receiver, configured to receive a first operation administration and maintenance protocol frame transmitted by a local end network device, wherein the first OAM protocol frame contains a measurement object indicator, and the measurement object indicator is obtained by the local end network device according to a target flow to be measured;
an obtaining unit, configured to obtain a peer end measurement statistical information corresponding to the measurement object indicator, according to a corresponding relationship between the measurement object indicator and the peer end measurement statistical information; and
a transmitter, configured to transmit a second operation administration and maintenance protocol frame to the local end network device, wherein the second operation administration and maintenance protocol frame contains the measurement object indicator and the peer end measurement statistical information, so that the local end network device measures Ethernet performance of the target flow according to the measurement object indicator and the peer end measurement statistical information.

19. The device according to claim 18, wherein the obtaining unit contains a maintenance entity group end point; the measurement object indicator is one or multiple of a target address, a source address, a service priority or a virtual local area network identifier corresponding to the target flow; and the obtaining unit is specifically configured to:

obtain, by the maintenance entity group end point contained in the obtaining unit, the peer end measurement statistical information corresponding to one or multiple of the target address, the source address, the service priority or the virtual local area network identifier, according to a corresponding relationship between one or multiple of the target address, the source address, the service priority or the virtual local area network identifier and the peer end measurement statistical information.

20. The device according to claim 18, wherein the obtaining unit contains a maintenance entity group end point, the measurement object indicator is a flow identifier corresponding to the target flow; and the obtaining unit is specifically configured to:

obtain, by the maintenance entity group end point contained in the obtaining unit, the peer end measurement statistical information corresponding to the flow identifier, according to a corresponding relationship between the flow identifier and the peer end measurement statistical information.

21. The device according to claim 19 or 20, the obtaining unit is further configured to:

monitor the target flow, match a service packet through recognizing an access control list of the target flow, make statistics of the matched service packets by utilizing a configured measurement resource, and generate the peer end measurement statistical information.

22. The device according to claim 18, wherein the obtaining unit contains at least two maintenance entity group end points; the measurement object indicator is a maintenance entity group end point identifier corresponding to the target flow; and the obtaining unit is specifically configured to :

transmit, by an operation administration and maintenance control entity contained in the obtaining unit, the first operation administration and maintenance protocol frame to a maintenance entity group end point corresponding to the maintenance entity group end point identifier of the at least two maintenance entity group end points, and obtain, by the maintenance entity group end point corresponding to the maintenance entity group end point identifier, the peer end measurement statistical information corresponding to the maintenance entity group end point.

23. The device according to claim 22, the obtaining unit is further configured to:

monitor the target flow, match a service packet through recognizing an access control list of the target flow, make statistics of the matched service packet by utilizing a measuring resource configured for the at least two maintenance entity group end points, and generate the peer end measurement statistical information.

A local end network device obtains a measurement object indicator according to a target flow to be measured, where the measurement object indicator is corresponding to the target flow

101

The local end network device transmits a first OAM protocol frame to a peer end network device, where the first OAM protocol frame contains the measurement object indicator, so that the peer end network device obtains a peer end measurement statistical information corresponding to the measurement object indicator, according to a corresponding relationship between the measurement object indicator and the peer end measurement statistical information

102

The local end network device receives a second OAM protocol frame transmitted by the peer end network device, where the second OAM protocol frame contains the measurement object indicator and the peer end measurement statistical information

103

The local end network device measures Ethernet performance of the target flow, according to the measurement object indicator and the peer end measurement statistical information

104

FIG. 1

| | 1 | | 2 | | 3 | | 4 | |
|---|---|---|---|---|---|---|---|---|
| | 8 7 6 5 4 3 2 1 | | 8 7 6 5 4 3 2 1 | | 8 7 6 5 4 3 2 1 | | 8 7 6 5 4 3 2 1 | |
| | MEL | Version (0) | OpCode (LMM = 43) | | Flag (0) | | TLV Offset value | |
| | TxFCf | | | | | | | |
| | Reserved for RxFCf in LMR | | | | | | | |
| | Reserved for TxFCb in LMR | | | | | | | |
| | Type of flow identifier | | Length of flow identifier | | | | Flow ID | |
| | Value of flow identifier | | | | | | Terminating TLV(0) | |

FIG. 2

| | 1 | | 2 | | 3 | | 4 | |
|---|---|---|---|---|---|---|---|---|
| | 8 7 6 5 4 3 2 1 | | 8 7 6 5 4 3 2 1 | | 8 7 6 5 4 3 2 1 | | 8 7 6 5 4 3 2 1 | |
| | MEL | Version (0) | OpCode (LMR =42) | | Flag (0) | | TLV Offset value | |
| | TxFCf | | | | | | | |
| | RxFCf | | | | | | | |
| | TxFCb | | | | | | | |
| | Type of flow identifier | | Length of flow identifier | | | | Flow ID | |
| | Value of flow identifier | | | | | | Terminating TLV(0) | |

FIG. 3

| 1 | | 2 | | 3 | | 4 | |
|---|---|---|---|---|---|---|---|
| 8 7 6 5 4 3 2 1 | | 8 7 6 5 4 3 2 1 | | 8 7 6 5 4 3 2 1 | | 8 7 6 5 4 3 2 1 | |
| MEP ID type (50) | | MEP ID Length (2) | | | | MEP ID value | |
| MEP ID value | | | | | | | |

FIG. 4

A peer end network device receives a first OAM protocol frame transmitted by a local end network device, where the first OAM protocol frame contains a measurement object indicator, and the measurement object indicator is obtained by the local end network device according to a target flow to be measured ⌇501

The peer end network device obtains peer end measurement statistical information corresponding to the measurement object indicator, according to a corresponding relationship between the measurement object indicator and the peer end measurement statistical information ⌇502

The peer end network device transmits a second OAM protocol frame to the local end network device, where the second OAM protocol frame contains the measurement object indicator and the peer end measurement statistical information, so that the local end network device measures Ethernet performance of the target flow according to the measurement object indicator and the peer end measurement statistical information ⌇503

FIG. 5

| Obtaining Unit | 61 |
| Transmitter | 62 |
| Receiver | 63 |
| Detector | 64 |

FIG. 6

FIG. 7

## INTERNATIONAL SEARCH REPORT

| International application No. |
|---|
| PCT/CN2012/083466 |

**A.    CLASSIFICATION OF SUBJECT MATTER**

H04L 12/26 (2006.01) i

According to International Patent Classification (IPC) or to both national classification and IPC

**B.    FIELDS SEARCHED**

Minimum documentation searched (classification system followed by classification symbols)

IPC: H04L; H04W; H04Q

Documentation searched other than minimum documentation to the extent that such documents are included in the fields searched

Electronic data base consulted during the international search (name of data base and, where practicable, search terms used)

CPRSABS, CNTXT, CNKI, VEN: performance measurement, OAM, P2MP, point to multi point, multicast, measurement object, identifier, ID, stream

**C.    DOCUMENTS CONSIDERED TO BE RELEVANT**

| Category* | Citation of document, with indication, where appropriate, of the relevant passages | Relevant to claim No. |
|---|---|---|
| PX | CN 102651702 A (HUAWEI TECHNOLOGIES CO., LTD.) 29 August 2012 (29.08.2012) , see claims 1-23 | 1-23 |
| X | CN 101854268 A (HUAWEI TECHNOLOGIES CO., LTD.) 06 October 2010 (06.10.2010) , see description, paragraphs [0066]-[0068], [0087], [0168], [0169], [0203]-[0205] and [0382]-[0387], and tables 32-35 | 1-23 |
| A | CN 1992651 A2 (HUAWEI TECHNOLOGIES CO., LTD.) 04 July 2007 (04.07.2007) , the whole document | 1-23 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 23 January 2013 (23.01.2013) | 31 January 2013 (31.01.2013) |

| Name and mailing address of the ISA/CN State Intellectual Property Office of the P. R. China No. 6, Xitucheng Road, Jimenqiao Haidian District, Beijing 100088, China Facsimile No. (86-10)62019451 | Authorized officer LIU, Jinfeng Telephone No. (86-10) 62412149 |
|---|---|

Form PCT/ISA /210 (second sheet) (July 2009)

# EP 2 833 574 A1

## INTERNATIONAL SEARCH REPORT
### Information on patent family members

| | International application No. |
|---|---|
| | PCT/CN2012/083466 |

| Patent Documents referred | Publication Date | Patent Family | Publication Date |
|---|---|---|---|
| CN 102651702 A | 29.08.2012 | None | |
| CN 101854268 A | 06.10.2010 | EP 2416527 A1 | 08.02.2012 |
| | | US 2012026869 A1 | 02.02.2012 |
| | | WO 2010111896 A1 | 07.10.2010 |
| CN 1992651 A | 04.07.2007 | WO 2007073648 A1 | 05.07.2007 |
| | | CN 1992651 B | 01.12.2010 |

Form PCT/ISA/210 (patent family annex) (July 2009)

22

**EP 2 833 574 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210141998